# EUROPÄISCHE PATENTSCHRIFT

(11) **EP 2 868 164 B1**
(45) Veröffentlichungstag und Bekanntmachung des Hinweises auf die Patenterteilung: **05.08.2020**
(21) Anmeldenummer: 13733273.0
(22) Anmeldetag: 27.06.2013
(51) Int. Cl.: H05B 47/10, H04L 29/12, H05B 47/18

(54) **STEUERUNGSSYSTEM FÜR VERTEILT ANGEORDNETE VERBRAUCHER UND VERFAHREN ZUR INBETRIEBNAHME DES SYSTEMS**
CONTROL SYSTEM FOR LOADS WITH A DISTRIBUTED ARRANGEMENT, AND METHOD FOR PUTTING THE SYSTEM INTO OPERATION
SYSTÈME DE COMMANDE DESTINÉ À DES CONSOMMATEURS RÉPARTIS, ET PROCÉDÉ PERMETTANT DE METTRE LEDIT SYSTÈME EN SERVICE

(30) Priorität: 27.06.2012 DE 102012210959
(43) Veröffentlichungstag der Anmeldung: 06.05.2015
(73) Patentinhaber: Zumtobel Lighting GmbH, 6850 Dornbirn (AT)
(72) Erfinder: STEFFENS, Thomas, 88161 Lindenberg im Allgäu (DE)
(74) Vertreter: Thun, Clemens
(86) Internationale Anmeldenummer: PCT/EP2013/063505
(87) Internationale Veröffentlichungsnummer: WO 2014/001448

(56) Entgegenhaltungen:
- EP-A1- 1 521 401
- WO-A1-95/14972

## Beschreibung

Die vorliegende Erfindung betrifft ein Verfahren zur Inbetriebnahme eines Steuerungssystems für mehrere verteilt angeordnete Verbraucher, wobei es sich bei den Verbrauchern beispielsweise um Leuchten, Lampenbetriebsgeräte und/oder Sensoren handeln kann. Ferner betrifft die vorliegende Erfindung ein entsprechendes Steuerungssystem sowie eine zur Verwendung in einem derartigen System vorgesehene Unterverteilereinheit.

In größeren Gebäuden kommen oftmals Beleuchtungssysteme zum Einsatz, die eine Vielzahl von verteilt angeordneten Leuchten oder anderen Verbrauchern aufweisen, welche über ein gemeinsames Bussystem mit einer zentralen Steuereinheit verbunden sind, wie dies bspw. auch in der EP 1 521 401 A1 gezeigt ist. Dies eröffnet beispielsweise die Möglichkeit, die Beleuchtung eines gesamten Gebäudekomplexes automatisch an den Tagesablauf anzupassen oder die Helligkeit einzelner Leuchten ferngesteuert zu verändern. Neben Leuchtenmodulen können allerdings auch andere Geräte der Hausleittechnik an das Bussystem angeschlossen werden, wie z. B. Klimageräte, Jalousiesteuerungen oder Sensoren jeglicher Art. Auch bei diesen weiteren Geräten wird durch den Anschluss an das Bussystem der Komfort bei der Bedienung erhöht. Allgemein werden solche an ein Bussystem der Gebäudeleittechnik anschließbaren Geräte auch als Aktoren bezeichnet.

Um die verschiedenen Aktoren eines Steuersystems einzeln ansteuern zu können, müssen diese eine individuelle Adresse aufweisen, über die sie von dem zentralen Befehlsgeber jeweils einzeln angesprochen werden können. Bei dieser individuellen Adresse kann es sich beispielsweise um eine Produktionsnummer handeln, die den Aktoren bei deren Herstellung zugewiesen wird. Oftmals ist es allerdings auch erwünscht, mehrere Aktoren gemeinsam anzusprechen. Dies ist zum Beispiel dann der Fall, wenn sämtliche in einem Raum befindlichen Leuchten auf einen bestimmten Helligkeitswert eingestellt oder die Jalousien einer Fensterfront einheitlich in eine bestimmte Stellung gebracht werden sollen. Zwar kann auch dieses gruppenweise Ansteuern über die Ursprungsadressen der Aktoren erfolgen, vorteilhaft wäre allerdings, wenn die Adressen bereits die Anordnung oder Gruppierung der einzelnen Aktoren berücksichtigen würden.

Es ist daher üblich, den einzelnen Aktoren bei der Installation bzw. Inbetriebnahme des Steuersystems oder beim Hinzufügen eines neuen Aktors zu dem System eine sogenannte Betriebsadresse zuzuweisen, welche die Anordnung und/oder Gruppierung des Aktors bereits berücksichtigt. Um eine bestimmte Gruppe der Aktoren gemeinsam anzusteuern, muss dann nicht mehr jeder einzelne Aktor dieser Gruppe unter seiner persönlichen Ursprungsadresse kontaktiert werden. Vielmehr ist es ausreichend, einen Befehl auf das Bussystem zu geben, der an die entsprechende Gruppe gerichtet ist und von sämtlichen Aktoren dieser Gruppe automatisch ausgeführt wird. Diese Betriebsadresse kann sogar eine gestaffelte Klassifizierung beinhalten, die es dem Befehlsgeber erlaubt, jeweilige Gruppen und Untergruppen von Aktoren anzusprechen. Darüber hinaus sind derartige Betriebsadressen oftmals erheblich kompakter und kürzer als die in der Regel sehr komplexen Ursprungsadressen, wodurch der Datentransfer über das Bussystem erleichtert und erhöht wird.

Für das Zuordnen der Betriebsadressen an die einzelnen Verbraucher ist es allerdings erforderlich, dass die zentrale Steuereinheit zunächst deren Ursprungsadressen kennt bzw. die Möglichkeit besitzt, die Verbraucher individuell anzusprechen. Eine bekannte Lösung hierfür ist beispielsweise aus der WO 95/14972 A1 bekannt. Hierbei erzeugt der zentrale Befehlsgeber sogenannte Suchadressen und übermittelt diese gleichzeitig an sämtliche Aktoren. Die Aktoren vergleichen dann ihre Ursprungsadressen mit der Suchadresse und geben eine Rückmeldung, ob ihre jeweilige Ursprungsadresse ober-oder unterhalb der Suchadresse liegt. Auf Grundlage dieser Rückmeldungen stellt der zentrale Befehlsgeber fest, ob es keinen, einen oder sogar mehrere Aktoren mit einer Ursprungsadresse unterhalb oder oberhalb der Suchadresse gibt.

Die von dem zentralen Befehlsgeber übermittelten Suchadressen werden entsprechend einem Algorithmus dann solange verändert und die Antworten der Aktoren ausgewertet, bis von dem zentralen Befehlsgeber eine der Anzahl der Aktoren entsprechende Anzahl von Adressbereichen bestimmt wurde, wobei die Ursprungsadresse jedes Aktors in jeweils einem dieser Adressbereiche liegt. Bevor die Aktoren individuell zur Abgabe des Identifizierungssignals aufgefordert werden, wird bei diesen Verfahren somit eine Liste erstellt, die Auskunft darüber gibt, wie viele Aktoren an das gesamte Bussystem angeschlossen sind und in welchen Adressbereichen jeweils die einzelnen Ursprungsadressen liegen.

Bei einer weiteren aus dem Stand der Technik bekannten Variante, die Ausgangspunkt für die vorliegende Erfindung ist, enthält der Suchbefehl des zentralen Befehlsgebers einen Adressbereich, wobei die Aktoren eine Rückmeldung bzw. Antwort an den zentralen Befehlsgeber übermitteln, sofern ihre Ursprungsadresse innerhalb des Suchbereichs liegt. Dabei wird im Rahmen eines Algorithmus der Suchbereich solange variiert, bis lediglich ein einziger Aktor antwortet, also eine eindeutige Antwort bei dem zentralen Befehlsgeber eintrifft. Diesem wird dann eine Betriebsadresse zugewiesen und der oben geschilderte Ablauf wird unter Ausschluss derjenigen Aktoren, die bereits eine Betriebsadresse aufweisen, wiederholt.

Dieses bekannte Verfahren eröffnet zwar ebenfalls die Möglichkeit, jeden einzelnen Verbraucher des Systems individuell zu kontaktieren bzw. zu identifizieren, allerdings benötigt der gesamte Ablauf eine gewisse Zeit, insbesondere wenn eine hohe Anzahl an Verbrauchern an das System angeschlossen ist. In diesem Fall ist jeweils eine Vielzahl von Iterationsschritten erforderlich, um den Adressbereich des Suchbefehls derart einzuschränken, dass nur ein einziger Teilnehmer antwortet.

Der vorliegenden Erfindung liegt deshalb die Aufgabenstellung zugrunde, eine Lösung anzubieten, mit deren Hilfe das oben angegebene Verfahren beschleunigt werden kann. Insbesondere soll in einem größeren Steuerungssystem für die zentrale Steuereinheit die Möglichkeit geschaffen werden, relativ schnell und effizient die einzelnen an das System angeschlossenen Verbraucher zu erkennen.

Die Aufgabe wird durch ein Verfahren zur Inbetriebnahme eines Steuerungssystems mit den Merkmalen des Anspruchs 1 sowie durch ein Steuerungssystem gemäß Anspruch 6 und eine hierfür vorgesehene Unterverteilereinheit gemäß Anspruch 12 gelöst. Vorteilhafte Weiterbildungen der Erfindung sind Gegenstand der abhängigen Ansprüche.

Die erfindungsgemäße Lösung beruht auf dem Gedanken, in das Bussystem Unterverteilereinheiten bzw. so genannte Splitter zu integrieren. Diese weisen einen dem zentralen Befehlsgeber zugewandten eingangsseitigen Anschluss sowie zumindest zwei den Verbrauchern zugewandte ausgangsseitige Anschlüsse auf. Die Unterverteilereinheiten sind im Gegensatz zu klassischen Splittern, über welche lediglich eine Weiterleitung der Signale erfolgt, intelligent ausgestaltet und zwar derart, dass bei Eintreffen von Rückmeldungen an den ausgangsseitigen Anschlüssen als Antwort auf die Aufforderung zur Abgabe eines Identifizierungssignals hin lediglich eine Rückmeldung einer der ausgangsseitigen Anschlüsse an den eingangsseitigen Anschluss weitergeleitet wird.

Erfindungsgemäß wird dementsprechend ein Verfahren zur Inbetriebnahme eines Steuerungssystems für mehrere verteilt angeordnete Verbraucher, beispielsweise Leuchten, Lampenbetriebsgeräte oder Sensoren vorgeschlagen, wobei die Verbraucher über ein Bussystem mit einem zentralen Befehlsgeber verbunden sind, wobei der zentrale Befehlsgeber die Verbraucher zur Abgabe eines Identifizierungssignals auffordert und für den Fall, dass nach dieser Aufforderung lediglich eine einzige Rückmeldung bei dem Befehlsgeber eintrifft, den entsprechenden Verbraucher individuell kontaktiert. Dabei weist das Bussystem erfindungsgemäß zumindest eine Unterverteilereinheit auf, welche einen dem zentralen Befehlsgeber zugewandten eingangsseitigen Anschluss sowie zumindest zwei den Verbrauchern zugewandte ausgangsseitige Anschlüsse aufweist, wobei die Unterverteilereinheit bei Eintreffen von Rückmeldungen an den ausgangsseitigen Anschlüssen als Antwort auf die Aufforderung zur Abgabe eines Identifizierungssignals lediglich eine der Rückmeldungen über den eingangsseitigen Anschluss weiterleitet.

Die erfindungsgemäßen Unterverteilereinheiten sorgen also dafür, dass selbst für den Fall, dass von mehreren Verbrauchern gleichzeitig Identifizierungssignale abgegeben werden, lediglich die Signale, die zeitgleich an einem ausgangsseitigen Anschluss eintreffen, die zentrale Steuereinheit erreichen. In diesem Zustand wird also eine individuelle Kommunikation zwischen Steuereinheit und einem einzelnen Verbraucher sichergestellt, sofern nur ein Verbraucher pro ausgangsseitigem Anschluss angeschlossen ist, sodass die Steuereinheit unmittelbar dem Verbraucher eine Betriebsadresse zuordnen und ihn anschließend unter dieser Betriebsadresse ansteuern kann. Sind hingegen mehrere Verbraucher an einen Anschluss angeschlossen, so kann auch hier evtl. eine nicht eindeutige Rückmeldung erfolgen. Im Gegensatz zum Verfahren des Standes der Technik, bei dem im Rahmen zahlreicher Iterationsschritte der Adressbereich bei der Abfrage erst langsam eingeschränkt werden musste, bis eine individuelle Kommunikation zwischen zentralem Befehlsgeber und einem Verbraucher möglich war, sind bei Einsatz der erfindungsgemäßen Unterverteilereinheit weniger, optimalerweise lediglich eine einzige Abfrage erforderlich, bis eine individuelle Kommunikation vorliegt. Voraussetzung hierfür ist selbstverständlich, dass innerhalb des Adressbereichs der Abfrage tatsächlich zumindest die Ursprungsadresse eines der Verbraucher liegt. Dies kann allerdings ohne Weiteres dadurch sichergestellt sein, dass bei jeder Abfrage der maximale Adressbereich angegeben wird. Dementsprechend kann also im einfachsten Fall mit einer Anzahl von Suchabfragen, die der Anzahl der angeschlossenen Verbraucher entspricht, das gesamte System identifiziert werden.

Sobald eine individuelle Kommunikation zwischen zentralem Befehlsgeber und einem Verbraucher hergestellt wurde, kann dann beispielsweise vorgesehen sein, dass der zentrale Befehlsgeber im Rahmen dieses individuellen Kontaktierens dem Verbraucher eine Betriebsadresse zuweist und gegebenenfalls dazu auffordert, nachfolgende Aufforderungen zur Abgabe eines Identifizierungssignals zu ignorieren. Das erfindungsgemäße Herstellen einer individuellen Kommunikation zwischen dem Befehlsgeber und einem Verbraucher kann allerdings auch zu anderen Zwecken sinnvoll genutzt werden und ist nicht auf die Vergabe von Betriebsadressen beschränkt. Handelt es sich bei den Verbrauchern beispielsweise um Sensoren, so müssen diese nicht angesteuert werden und benötigen dementsprechend auch keine eigene Betriebsadresse. Eine individuelle Kommunikation kann allerdings auch in diesem Fall hilfreich sein, um Daten von den Sensoren einzeln abfragen zu können.

Die erfindungsgemäßen Unterverteilereinheiten leiten beispielsweise jeweils die zuerst eintreffende Rückmeldung weiter und lassen bis zum Eintreffen einer neuen Abfrage nur noch eine Kommunikation über den entsprechenden Ausgangsanschluss mit dem zentralen Befehlsgeber zu. Alternativ hierzu kann eine Unterverteilereinheit allerdings auch nach Eintreffen einer ersten Rückmeldung einen vorgegebenen Zeitraum abwarten und für den Fall, dass innerhalb dieses Zeitraums eine Rückmeldung eintrifft, welche ein vorgegebenes Auswahlkriterium erfüllt, diese Rückmeldung weiterleiten. Für den Fall hingegen, dass innerhalb des Zeitraums keine Rückmeldung eintrifft, welche das vorgegebene Auswahlkriterium erfüllt, wird die zuerst eingetroffene Rückmeldung weitergeleitet.

Ferner kann durchaus vorgesehen sein, dass an zumindest einem ausgangsseitigen Anschluss der Unterverteilereinheit eine weitere Unterverteilereinheit in identischer Weise angeschlossen ist. Das heißt, die erfindungsgemäßen Einheiten können durchaus auch in einer hierarchischen Struktur angeordnet werden. Ohne dass spezielle Maßnahmen erforderlich wären, ist trotz allem gewährleistet, dass nach Abgeben idealerweise lediglich einer einzigen Suchabfrage maximal ein Verbraucher in Kommunikation mit dem zentralen Befehlsgeber tritt. Ferner können an einen ausgangsseitigen Anschluss einer Unterverteilereinheit auch mehrere Verbraucher angeschlossen werden, die dann während des späteren Betriebs einheitlich angesteuert werden.

Nachfolgend soll die Erfindung anhand der beiliegenden Zeichnung näher erläutert werden. Es zeigen:
- Figur 1: ein erstes Ausführungsbeispiel eines erfindungsgemäßen Steuerungssystems;
- Figuren 2a und 2b: schematisch das Verhalten einer Unterverteilereinheit gemäß dem Stand der Technik;
- Figuren 3a und 3b: schematisch das Verhalten einer erfindungsgemäßen Unterverteilereinheit und
- Figur 4: ein zweites Ausführungsbeispiel eines erfindungsgemäßen Steuerungssystems;

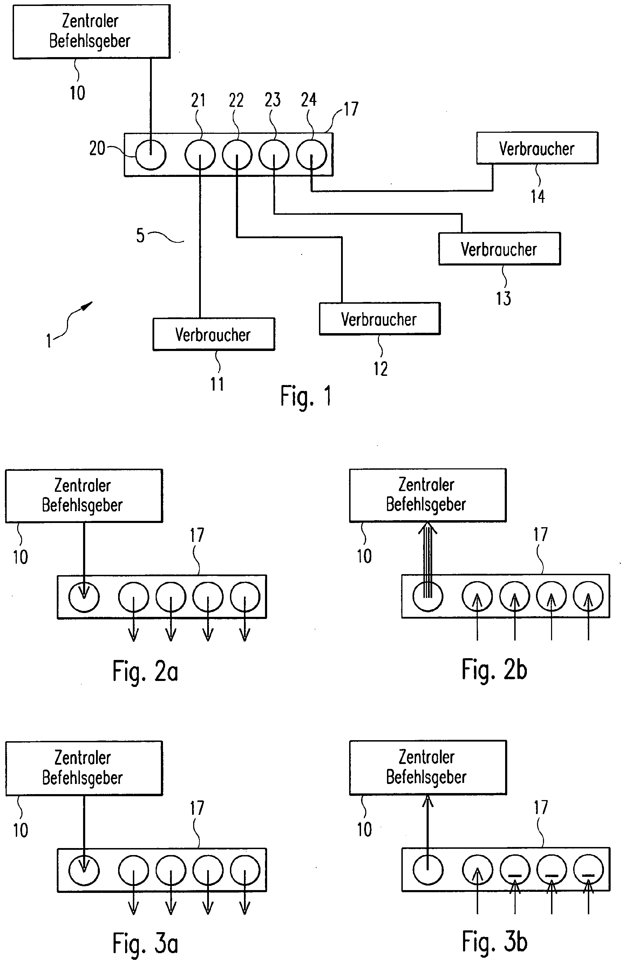

Figur 1 zeigt als erstes Ausführungsbeispiel der vorliegenden Erfindung eine erste Variante eines Steuerungssystems 1 für mehrere verteilt angeordnete Verbraucher, wobei von einer zentralen Steuereinheit bzw. einem Befehlsgeber 10 aus vier verschiedene Verbraucher 11 bis 14 angesteuert werden. Bei diesen Verbrauchern kann es sich um Geräte der Hausleittechnik handeln, also beispielsweise um Leuchten, Lampenbetriebsgeräte, Sensoren, Klimaeinrichtungen und/oder Abschattungseinrichtungen wie Jalousien oder dergleichen. Nachfolgend sollen diese Geräte, die oftmals auch als Aktoren der Hausleittechnik bezeichnet werden, allgemein als Verbraucher des Systems 1 bezeichnet werden.

Die Kommunikation zwischen der zentralen Steuereinrichtung 10 und den Verbrauchern 11 bis 14 erfolgt im dargestellten Ausführungsbeispiel entsprechend dem so genannten RDM-Standard (Remote Device Management). Es handelt sich um eine Ergänzung des DMX-Protokolls (Digital Multiplex), welches ein weit verbreitetes digitales Steuerprotokoll zum Ansteuern von Verbrauchern ist und ursprünglich in der Bühnen- und Veranstaltungstechnik zur Steuerung von Dimmern angewendet wurde. Während das DMX-Protokoll in der ursprünglichen Version lediglich eine Kommunikation in einer Richtung, also beispielsweise von der Steuereinrichtung 10 zu den Verbrauchern 11 bis 14 zuließ, ermöglicht das RDM-Protokoll eine bidirektionale Kommunikation, die das Übersenden von Rückmeldungen von den Verbrauchern zu einer Zentrale hin ermöglicht. Wie nachfolgend noch näher beschrieben wird, ist dies insbesondere für die Inbetriebnahme eines derartigen Systems von großer Bedeutung. Grundsätzlich ist die Erfindung allerdings nicht auf Systeme entsprechend dem RDM-Protokoll beschränkt, sondern kann immer dann zum Einsatz kommen, wenn eine Ansteuerung verteilt angeordneter Verbraucher im Rahmen eines bidirektionalen Kommunikationsstandards erfolgen soll.

Die Verbindung zwischen dem zentralen Befehlsgeber 10, dem so genannten RDM-Controller und den Verbrauchern 11 bis 14, den sog. RDM-Respondern, erfolgt über ein Bus- bzw. Datenleitungssystem 5 welches der Übermittlung der Steuerbefehle und Rückmeldungen dient. Nicht dargestellt sind im Ausführungsbeispiel von Figur 1 weitere Leitungen, über welche eine Stromversorgung der verschiedenen Einheiten des Systems 1 erfolgt. Diese sind kein zentraler Bestandteil der vorliegenden Erfindung und sollen dementsprechend im Weiteren nicht näher erläutert werden.

Eine Besonderheit des Systems 1 von Figur 1 besteht dabei ferner darin, dass in das Bussystem 5 eine Unterverteilereinheit 17, ein so genannter RDM-Splitter integriert ist. Diese Unterverteilereinheit 17 verbindet den zentralen Befehlsgeber 10 mit den Verbrauchern 11 bis 14 und weist hierzu einen eingangsseitigen Anschluss 20 sowie ausgangsseitige Anschlüsse 21 bis 24 auf, die jeweils dem zentralen Befehlsgeber 10 bzw. den Verbrauchern 11 bis 14 zugeordnet sind. Derartige DMX- oder RDM-Splitter sind bereits aus dem Stand der Technik bekannt und wurden auch in der Vergangenheit vielfach eingesetzt, um den Anschluss einer Vielzahl von Verbrauchern an ein entsprechendes System zu ermöglichen. Üblicherweise sind derartige Unterverteilereinheiten vollkommen "transparent" ausgebildet, d.h., über den eingangsseitigen Anschluss eintreffende Signale werden vollkommen gleichberechtigt über alle ausgangsseitigen Anschlüsse weitergeleitet. Umgekehrt wird jedes über einen ausgangsseitigen Anschluss eintreffende Signal, also z.B. jede Rückmeldung eines Verbrauchers ohne Auswahl über den eingangsseitigen Anschluss an den zentralen Befehlsgeber übermittelt.

Das erfindungsgemäße Konzept hingegen sieht einen intelligenten Splitter vor, der in bestimmten Situationen eine selektive Weiterleitung von Signalen bzw. Rückmeldungen vornimmt, was wie nachfolgend beschrieben zu einer deutlichen Vereinfachung bei der Inbetriebnahme des Systems führt. Hierfür soll zunächst nochmals kurz die aus dem Stand der Technik bekannte Vorgehensweise zur Inbetriebnahme eines derartigen Systems erläutert werden.

Um ein Ansteuern der Verbraucher 11 bis 14 zu ermöglichen, ist vorgesehen, diesen jeweils eine für den späteren Betrieb genutzte Betriebsadresse zuzuweisen. Ein von dem zentralen Befehlsgeber 10 übermittelter Befehl enthält dabei dann auch eine entsprechende Adressinformation, sodass jeder Verbraucher erkennen kann, ob ein eintreffender Steuerbefehl für ihn gedacht ist oder nicht.

Zum Zuweisen der Betriebsadressen ist es allerdings erforderlich, dass zunächst der zentrale Befehlsgeber 10 überhaupt in der Lage ist, die Verbraucher 11 bis 14 individuell zu kontaktieren. Hierzu weisen die Verbraucher 11 bis 14 in einem Ausgangszustand eine Ursprungsadresse auf, welche beispielsweise während der Herstellung vergeben werden kann oder von den Verbrauchern 11 bis 14 per Zufall generiert wird. Bei der aus dem Stand der Technik bekannten Vorgehensweise ist vorgesehen, dass der zentrale Befehlsgeber 10 die Verbraucher dazu auffordert, sich zu identifizieren. Im Rahmen des RDM-Standards wird dieser Befehl als Discovery-Anfrage bezeichnet, welche gleichzeitig an alle Verbraucher 11 bis 14 übermittelt wird und darüber hinaus einen Adressbereich beinhaltet, der von dem zentralen Befehlsgeber 10 vorgegeben wird. Dieser Befehl wird von den 11 bis 14 Verbrauchern dahingehend interpretiert, dass alle Verbraucher 11 bis 14, deren Ursprungsadresse innerhalb dieses Adressbereichs liegen, eine Rückmeldung übersenden sollen.

In einem ersten Schritt wird deshalb von dem zentralen Befehlsgeber 10 ein sehr großer Adressbereich angegeben, wobei dann üblicherweise mehrere der Verbraucher 11 bis 14 eine Rückmeldung übersenden werden. In diesem Fall empfängt also der zentrale Befehlsgeber 10 keine eindeutige Antwort sondern wird in einem darauffolgenden Schritt einen weiteren Suchbefehl übermitteln, nunmehr allerdings mit einem modifizierten, insbesondere verkleinerten Such-Adressbereich. Im Rahmen eines speziellen Algorithmus wird dies solange wiederholt, bis schließlich eine eindeutige Rückmeldung bei dem zentralen Befehlsgeber 10 eintrifft, also der Adressbereich derart eingeschränkt wurde, dass nur noch ein einziger Verbraucher 11 bis 14 antwortet. Diesem wird dann eine Betriebsadresse zugewiesen und mitgeteilt, dass er weitere nachfolgende Suchanfragen ignorieren soll. Die zuvor beschriebenen Schritte werden dann wiederum wiederholt, bis schließlich jeder Verbraucher 11 bis 14 eine Betriebsadresse erhalten hat.

Auch wenn der oben angesprochene Algorithmus zum Verändern des Such-Adressbereichs derart optimiert ist, dass die Anzahl der erforderlichen Suchbefehle möglichst gering gehalten wird, so ist bei dem beschriebenen Verfahren aus dem Stand der Technik doch die Übermittlung einer sehr hohen Anzahl von Suchbefehlen erforderlich. Dies bedeutet letztendlich, dass das Verfahren zur Inbetriebnahme des Systems mit einem hohen Zeitaufwand verbunden wird.

Um dieses Verfahren zu optimieren wird deshalb erfindungsgemäß vorgeschlagen, die Unterverteilereinheit 17 intelligent auszugestalten. Insbesondere ist hierbei vorgesehen, dass nach Übermittlung einer Suchanfrage von dem zentralen Befehlsgeber 10 unabhängig davon, wie viele Rückmeldung an den ausgangsseitigen Anschlüssen 21 bis 24 der Unterverteilereinheit 17 eintreffen, lediglich eine einzige dieser Rückmeldungen über den eingangsseitigen Anschluss 20 an den zentralen Befehlsgeber 10 weitergeleitet wird. Beispielsweise kann also vorgesehen sein, dass lediglich die zuerst an den ausgangsseitigen Anschlüssen 21 bis 24 eintreffende Rückmeldung weitergeleitet wird, später eintreffende Rückmeldungen hingegen blockiert bzw. ignoriert werden.

Diese Vorgehensweise hat zur Folge, dass nach Übermitteln eines Suchbefehls von dem zentralen Befehlsgeber 10 an die Verbraucher 11 bis 14 maximal eine einzige Rückmeldung bei dem Befehlsgeber 10 eintrifft, nämlich diejenige des Verbrauchers 11 bis 14, der am schnellsten auf die Suchanfrage reagiert hat. In sinnvoller Weise wird in diesem Fall der dem Suchbefehl beigefügte Such-Adressbereich möglichst groß gewählt werden, um sicherzustellen, dass er in jedem Fall zumindest eine der Ursprungsadressen der Verbraucher 11 bis 14 umfasst. In einfachster Weise kann also einem Suchbefehl jedes Mal der maximale Such-Adressbereich beigefügt werden.

Sobald dann durch die Unterverteilereinheit 17 eine individuelle Verbindung zwischen dem zentralen Befehlsgeber 10 und dem am schnellsten reagierenden Verbraucher hergestellt wurde, kann dann in der üblichen Weise diesem Verbraucher durch den Befehlsgeber 10 eine Betriebsadresse zugewiesen werden. Ferner wird der Verbraucher dazu aufgefordert, auf spätere Suchanfragen nicht mehr zu reagieren. Wiederum werden diese Schritte dann solange wiederholt, bis jedem Verbraucher 11 bis 14 eine Betriebsadresse zugewiesen wurde.

Im Gegensatz zu dem Verfahren aus dem Stand der Technik muss nunmehr allerdings nicht eine Vielzahl von Suchanfragen übermittelt werden. Stattdessen ist im dargestellten Ausführungsbeispiel die Übermittlung von lediglich vier Suchanfragen ausreichend, da aufgrund der Intelligenz der Unterverteilereinheit 17 sichergestellt ist, dass jedes Mal lediglich eine einzige Rückmeldung an den Befehlsgeber 10 erfolgt.

Die unterschiedlichen Verhaltensweisen eines aus dem Stand der Technik bekannten RDM-Splitters und eines erfindungsgemäßen Splitters sollen nachfolgend nochmals anhand der Figuren 2 und 3 verdeutlicht werden.

Die Figuren 2a und 2b zeigen dabei schematisch das Verhalten eines herkömmlichen RDM-Splitters während der Übermittlung eines Suchbefehls (Figur 2a) und der Übermittlung der von den Verbrauchern abgegebenen Rückmeldungen (Figur 2b). Erkennbar ist, dass der Splitter in beiden Fällen vollkommen transparent sämtliche eintreffende Signale durchlässt, also bei Übermittlung des Suchbefehls diesen über sämtliche vier Ausgangsanschlüsse weiterleitet. In gleicher Weise werden allerdings auch über die ausgangsseitigen Anschlüsse eintreffende Rückmeldungen alle über den eingangsseitigen Anschluss an den zentralen Befehlsgeber weitergeleitet, sodass dort letztendlich vier überlagerte Antworten eintreffen und den Befehlsgeber dazu veranlassen, im Rahmen einer weiteren Suchanfrage den Such-Adressbereich zu modifizieren.

Das Verhalten des erfindungsgemäßen Unterverteilers ist demgegenüber in den Figuren 3a und 3b dargestellt, wobei zunächst erkennbar ist, dass bei Übermittlung des Suchbefehls der intelligente Splitter sich in gleicher Weise verhält, also den Suchbefehl über alle ausgangsseitigen Anschlüsse weiterleitet. Hingegen unterscheidet sich das Verhalten des erfindungsgemäßen Splitters beim Weiterleiten eintreffender Rückmeldungen, da lediglich eine einzige Rückmeldung (hier diejenige des Verbrauchers 1) weitergeleitet wird, während hingegen die drei weiteren Rückmeldungen geblockt werden. In diesem Zustand liegt eine individuelle Verbindung zwischen dem Befehlsgeber und dem ersten Verbraucher vor, welche das unmittelbare Zuweisen der Betriebsadresse ermöglicht. Erst durch ein späteres Signal, beispielsweise die erneute Übermittlung einer Suchanfrage, wird dieser Zustand aufgehoben und von dem zentralen Befehlsgeber abgegebene Signale werden wieder über alle Ausgangsanschlüsse weitergeleitet.

Der Vorteil der erfindungsgemäßen Lösung besteht auch darin, dass der erfindungsgemäße RDM-Splitter bzw. der Unterverteiler transparent bleiben kann, also nicht als separates Gerät an dem Bussystem erscheint. Für alle weiteren von dem zentralen Befehlsgeber aus übermittelten Befehle verhält sich der erfindungsgemäße Splitter wie ein gewöhnlicher RDM-Splitter, sodass das System insgesamt hinsichtlich seiner Steuerungsmöglichkeiten und dergleichen sich vollständig identisch zu einem klassischen System entsprechend dem Stand der Technik verhält.

Bei dem zuvor erläuterten Ausführungsbeispiel war vorgesehen, dass die intelligente Unterverteilereinheit diejenige Rückmeldung an den zentralen Befehlsgeber weiterleitet, die zuerst eintrifft. Dies ist selbstverständlich die sinnvollste Vorgehensweise, es wäre allerdings auch denkbar, dass das individuelle Weiterleiten einer einzigen Rückmeldung nach anderen Kriterien erfolgt. Beispielsweise könnte vorgesehen sein, zu überprüfen, ob eine der Rückmeldungen ein besonderes Auswahlkriterium erfüllt. In diesem Fall würde dann diese Rückmeldung bevorzugt weitergeleitet werden. Dies kann beispielsweise dahingehend realisiert werden, dass nach Eintreffen einer ersten Rückmeldung zunächst für einen vorgegebenen Zeitraum abgewartet wird, ob noch weitere Rückmeldungen eintreffen. Trifft hierbei eine Rückmeldung ein, die das Auswahlkriterium erfüllt, so wird diese weitergeleitet. Trifft hingegen keine entsprechende Rückmeldung ein, so wird diejenige weitergeleitet, die zuerst eingetroffen ist. Zahlreiche Alternativen zu dieser Vorgehensweise wären denkbar, wobei wesentlich ist, dass grundsätzlich maximal eine einzige Rückmeldung weitergeleitet wird.

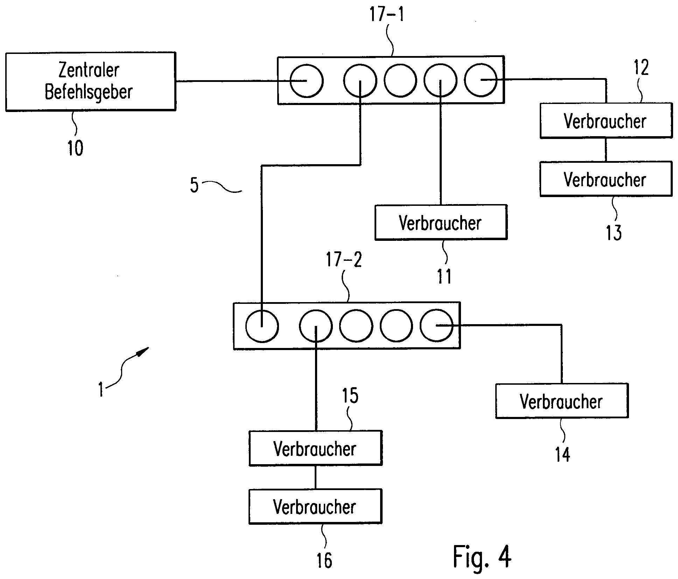

Eine Weiterbildung des in Figur 1 dargestellten Systems ist in Figur 4 dargestellt. Die Funktionsweise der an dem System 1 beteiligten Einheiten, also des zentralen Befehlsgebers 10, der Verbraucher 11 bis 16 sowie der Unterverteilereinheiten 17 ist identisch zu der zuvor beschriebenen Vorgehensweise. Das Ausführungsbeispiel von Figur 4 soll lediglich verdeutlichen, dass in das Bussystem 5 mehrere intelligente Unterverteilereinheiten 17 integriert werden können, wie dies hier dargestellt ist. In diesem Fall ist also die Unterverteilereinheit 17-2 an einen der ausgangsseitigen Anschlüsse der übergeordneten Unterverteilereinheit 17-1 angeschlossen, was letztendlich das Anschließen einer größeren Anzahl von Verbrauchern an das System 1 ermöglicht. Auch hier unterscheidet sich allerdings die Funktionsweise der Unterverteilereinheiten 17 nicht von derjenigen des Ausführungsbeispiels von Figur 1. Das heißt, nach Übermitteln einer Suchanfrage leiten beide Unterverteilereinheiten immer nur eine einzige an ihren ausgangsseitigen Anschlüssen eintreffende Rückmeldung weiter. Letztendlich erreicht also hier diejenige Rückmeldung den zentralen Befehlsgeber, welche zuerst bei der übergeordneten Unterverteilereinheit 17-1 eintrifft. Es kann sich dabei um eine Rückmeldung handeln, welche von einem der unmittelbar an diese Unterverteilereinheit 17-1 angeschlossenen Verbraucher stammt, oder um eine, die von der Unterverteilereinheit 17-2 weitergeleitet wurde.

Des Weiteren kann - wie ebenfalls in Figur 4 gezeigt - durchaus vorgesehen sein, dass an einen Ausgangsanschluss einer Unterverteilereinheit mehrere Verbraucher angeschlossen sind. Diesen kann dann beispielsweise jeweils die identische Betriebsadresse zugewiesen werden, d.h., die Verbraucher werden in gleicher Weise angesteuert und betrieben. Allerdings wäre in diesem Fall auch das Zuweisen unterschiedlicher Betriebsadressen denkbar. Ferner könnte selbstverständlich auch Verbrauchern, die an unterschiedliche ausgangsseitige Anschlüsse angeschlossen sind, die gleiche Betriebsadresse zugewiesen werden, um diese Verbraucher während des späteren Betriebs gleichartig anzusteuern.

Mit Hilfe der erfindungsgemäßen Lösung kann also die Inbetriebnahme eines entsprechenden Systems deutlich einfacher, schneller und effektiver erfolgen. Von Vorteil ist dabei insbesondere auch, dass der Einsatz der erfindungsgemäßen Unterverteilereinheiten das Verhalten aller erweiterten Komponenten des Systems nicht beeinträchtigt oder eine entsprechende Anpassung erfordert. Das heißt, die erfindungsgemäße Lösung ist sehr einfach und kostengünstig zu realisieren und bietet trotz allem die Möglichkeit, alle aus dem Stand der Technik bekannten Vorzüge eines entsprechenden Steuerungssystems zu nutzen.

Darauf hinzuweisen ist allerdings nochmals, dass die im Rahmen der vorliegenden Erfindung zur Verfügung gestellte Möglichkeit zum einfachen und schnellen individuellen Kontaktieren eines Verbrauchers durch den zentralen Befehlsgeber nicht auf die in den dargestellten Ausführungsbeispielen beschriebene Vergabe von Betriebsadressen beschränkt ist. Auch in anderen Fällen kann es sinnvoll sein, einzelne Verbraucher individuell zu Kontaktieren um z.B. Signale von Sensoren oder dgl. abzufragen. Die vorliegende Erfindung kann also sehr vielfältig verwendet werden.

## Patentansprüche

1. Verfahren zur Inbetriebnahme eines Steuerungssystems (1) für mehrere verteilt angeordnete Verbraucher (11-16), beispielsweise Leuchten, Lampenbetriebsgeräte oder Sensoren, wobei die Verbraucher (11-16) über ein Bussystem (5) mit einem zentralen Befehlsgeber (10) verbunden sind,
wobei der zentrale Befehlsgeber (10) die Verbraucher (11-16) zur Abgabe eines Identifizierungssignals auffordert und für den Fall, dass nach dieser Aufforderung lediglich eine einzige Rückmeldung bei dem Befehlsgeber (10) eintrifft, den entsprechenden Verbraucher (11-16) individuell kontaktiert,
**dadurch gekennzeichnet,**
**dass** das Bussystem (5) zumindest eine Unterverteilereinheit (17) aufweist, welche einen dem zentralen Befehlsgeber (10) zugewandten eingangsseitigen Anschluss (20) sowie zumindest zwei den Verbrauchern (11-16) zugewandte ausgangsseitige Anschlüsse (21-24) aufweist,
wobei die Unterverteilereinheit (17) bei Eintreffen von Rückmeldungen an den ausgangsseitigen Anschlüssen (21-24) als Antwort auf die Aufforderung zur Abgabe eines Identifizierungssignals lediglich eine der Rückmeldungen über den eingangsseitigen Anschluss (20) weiterleitet.

2. Verfahren nach Anspruch 1,
**dadurch gekennzeichnet,**
**dass** der zentrale Befehlsgeber (10) im Rahmen des individuellen Kontaktierens dem Verbraucher (11-16) eine Betriebsadresse zuweist und ggf. dazu auffordert,
nachfolgende Aufforderungen zur Abgabe eines Identifizierungssignals zu ignorieren.

3. Verfahren nach Anspruch 1 oder 2,
**dadurch gekennzeichnet,**
**dass** die Unterverteilereinheit (17) die jeweils zuerst eintreffende Rückmeldung weiterleitet.

4. Verfahren nach Anspruch 1 oder 2,
**dadurch gekennzeichnet,**
**dass** die Unterverteilereinheit (17) nach Eintreffen einer ersten Rückmeldung einen vorgegebenen Zeitraum abwartet und für den Fall, dass innerhalb dieses Zeitraums
• eine Rückmeldung eintrifft, welche ein vorgegebenes Auswahlkriterium erfüllt, diese Rückmeldung weiterleitet, oder
• keine Rückmeldung eintrifft, welche ein vorgegebenes Auswahlkriterium erfüllt, die zuerst eingetroffene Rückmeldung weiterleitet.

5. Verfahren nach einem der vorherigen Ansprüche,
**dadurch gekennzeichnet,**
**dass** an zumindest einem ausgangsseitigen Anschluss (21-24) der Unterverteilereinheit (17) eine weitere Unterverteilereinheit (17) angeschlossen ist.

6. Verfahren nach einem der vorherigen Ansprüche,
**dadurch gekennzeichnet,**
**dass** die Kommunikation zwischen dem zentralen Befehlsgeber (10) und den Verbrauchern (11-16) entsprechend dem RDM-Protokoll erfolgt.

7. Unterverteilereinheit (17) zur Verwendung in einem Steuerungssystem für mehrere verteilt angeordnete Verbraucher (11-16), beispielsweise Leuchten, Lampenbetriebsgeräte oder Sensoren, wobei das Steuerungssystem einen zentralen Befehlsgeber (10), ein Bussystem (5) sowie mehrere der Verbraucher (11-16) aufweist, wobei die Verbraucher (11-16) über das Bussystem (5) mit dem zentralen Befehlsgeber (10) verbunden sind und der zentrale Befehlsgeber (10) dazu ausgebildet ist, die Verbraucher (11-16) zur Abgabe eines Identifizierungssignals aufzufordern und für den Fall, dass nach dieser Aufforderung lediglich eine einzige Rückmeldung bei dem Befehlsgeber (10) eintrifft, den entsprechenden Verbraucher (11-16) individuell zu kontaktieren, wobei die Unterverteilereinheit (17) teil des Bussystems (5) ist;
**dadurch gekennzeichnet,**
**dass** die Unterverteilereinheit (17) einen dem zentralen Befehlsgeber (10) zugewandten eingangsseitigen Anschluss (20) sowie zumindest zwei den Verbrauchern (11-16) zugewandte ausgangsseitige Anschlüsse (21-24) aufweist und dazu ausgebildet ist, bei Eintreffen von Rückmeldungen an den ausgangsseitigen Anschlüssen (21-24) als Antwort auf die Aufforderung zur Abgabe eines Identifizierungssignals lediglich eine der Rückmeldungen über den eingangsseitigen Anschluss (20) weiterzuleiten.

8. Steuerungssystem für mehrere verteilt angeordnete Verbraucher (11-16), beispielsweise Leuchten, Lampenbetriebsgeräte oder Sensoren,
aufweisend einen zentralen Befehlsgeber (10), ein Bussystem (5) sowie mehrere Verbraucher (11-16),
wobei die Verbraucher (11-16) über das Bussystem (5) mit dem zentralen Befehlsgeber (10) verbunden sind und der zentrale Befehlsgeber (10) dazu ausgebildet ist, die Verbraucher (11-16) zur Abgabe eines Identifizierungssignals aufzufordern und
für den Fall, dass nach dieser Aufforderung lediglich eine einzige Rückmeldung bei dem Befehlsgeber (10) eintrifft, den entsprechenden Verbraucher (11-16) individuell zu kontaktieren,
**dadurch gekennzeichnet,**
**dass** das Bussystem (5) zumindest eine Unterverteilereinheit (17) gemäss Anspruch 7 aufweist.

9. Steuerungssystem nach Anspruch 8,
**dadurch gekennzeichnet,**
**dass** der zentrale Befehlsgeber (10) dazu ausgebildet ist, im Rahmen des individuellen Kontaktierens dem Verbraucher (11-16) eine Betriebsadresse zuzuweisen und ggf. dazu aufzufordern, nachfolgende Aufforderungen zur Abgabe eines Identifizierungssignals zu ignorieren.

10. Steuerungssystem nach Anspruch 8 oder 9,
**dadurch gekennzeichnet,**
**dass** die Unterverteilereinheit (17) dazu ausgebildet ist, die jeweils zuerst eintreffende Rückmeldung weiterzuleiten.

11. Steuerungssystem nach Anspruch 8 oder 9,
**dadurch gekennzeichnet,**
**dass** die Unterverteilereinheit (17) dazu ausgebildet ist, nach Eintreffen einer ersten Rückmeldung einen vorgegebenen Zeitraum abzuwarten und für den Fall, dass innerhalb dieses Zeitraums
• eine Rückmeldung eintrifft, welche ein vorgegebenes Auswahlkriterium erfüllt, diese Rückmeldung weiterzuleiten, oder
• keine Rückmeldung eintrifft, welche ein vorgegebenes Auswahlkriterium erfüllt, die zuerst eingetroffene Rückmeldung weiterzuleiten.

12. Steuerungssystem nach einem der Ansprüche 8 bis 11,
**dadurch gekennzeichnet,**
**dass** an zumindest einem ausgangsseitigen Anschluss (21-24) der Unterverteilereinheit (17) eine weitere Unterverteilereinheit (17) gemäss Anspruch 7 angeschlossen ist.

13. Steuerungssystem nach einem der Ansprüche 8 bis 12,
**dadurch gekennzeichnet,**
**dass** die Kommunikation zwischen dem zentralen Befehlsgeber (10) und den Verbrauchern (11-16) entsprechend dem RDM-Protokoll erfolgt.

## Claims

1. Method for starting up a control system (1) for a plurality of distributed loads (11-16), for example lights, lamp operating devices or sensors, wherein the loads (11-16) are connected via a bus system (5) to a central command emitter (10),
wherein the central command emitter (10) requests the loads (11-16) to output an identification signal and, if only a single acknowledgment arrives at the command emitter (10) after this request, contacts the corresponding load (11-16) individually,
**characterized in that**
the bus system (5) has at least one sub-distribution unit (17) which has an input-side connection (20) facing the central command emitter (10) and at least two output-side connections (21-24) facing the loads (11-16),
wherein, upon arrival of acknowledgments at the output-side connections (21-24) in response to the request to output an identification signal, the sub-distribution unit (17) forwards only one of the acknowledgments via the input-side connection (20).

2. Method according to Claim 1,
**characterized in that**
as part of individual contacting, the central command emitter (10) assigns an operating address to the load (11-16) and, if necessary, requests said load to ignore subsequent requests to output an identification signal.

3. Method according to Claim 1 or 2,
**characterized in that**
the sub-distribution unit (17) forwards the acknowledgment arriving first in each case.

4. Method according to Claim 1 or 2,
**characterized in that**
the sub-distribution unit (17) waits a predetermined time period after arrival of a first acknowledgment and, in the event that within this time period
• an acknowledgment arrives that meets a predetermined selection criterion, forwards this acknowledgment, or
• no acknowledgment arrives that meets a predetermined selection criterion, forwards the acknowledgment that arrived first.

5. Method according to any one of the preceding claims,
**characterized in that**
a further sub-distribution unit (17) is connected to at least one output-side connection (21-24) of the sub-distribution unit (17).

6. Method according to any one of the preceding claims,
**characterized in that**
communication between the central command emitter (10) and the loads (11-16) takes place in accordance with the RDM protocol.

7. Sub-distribution unit (17) for use in a control system for a plurality of distributed loads (11-16), for example lights, lamp operating devices or sensors, wherein the control system has a central command emitter (10), a bus system (5) and a plurality of the loads (11-16); wherein the loads (11-16) are connected via the bus system (5) to the central command emitter (10) and the central command emitter (10) is designed to request the loads (11-16) to output an identification signal, and, if only a single acknowledgment arrives at the central command emitter (10) after this request, to contact the corresponding load (11-16) individually; wherein the sub-distribution unit (17) is part of the bus system (5);
**characterized in that**
the sub-distribution unit (17) has an input-side connection (20) facing the central command emitter (10) and at least two output-side connections (21-24) facing the loads (11-16), and is designed, upon arrival of acknowledgments at the output-side connections (21-24) in response to the request to output an identification signal, to forward only one of the acknowledgments via the input-side connection (20).

8. Control system for a plurality of distributed loads (11-16), for example lights, lamp operating devices or sensors,
comprising a central command emitter (10), a bus system (5) and a plurality of loads (11-16),
wherein the loads (11-16) are connected via the bus system (5) to the central command emitter (10), and the central command emitter (10) is designed to request the loads (11-16) to output an identification signal and, if only a single acknowledgment arrives at the command emitter (10) after this request, to contact the corresponding load (11-16) individually,
**characterized in that**
the bus system (5) has at least one sub-distribution unit (17) according to Claim 7.

9. Control system according to Claim 8,
**characterized in that**
as part of individual contacting, the central command emitter (10) is designed to assign an operating address to the load (11-16) and, if necessary, to request said load to ignore subsequent requests to output an identification signal.

10. Control system according to Claim 8 or 9,
**characterized in that**
the sub-distribution unit (17) is designed to forward the acknowledgment arriving first in each case.

11. Control system according to Claim 8 or 9,
**characterized in that**
the sub-distribution unit (17) is designed to wait for a predetermined time period after arrival of a first acknowledgment and, in the event that within this time period
• an acknowledgment arrives that meets a predetermined selection criterion, to forward this acknowledgment, or
• no acknowledgment arrives that meets a predetermined selection criterion, to forward the acknowledgment that arrived first.

12. Control system according to any one of Claims 8 to 11,
**characterized in that**
a further sub-distribution unit (17) according to Claim 7 is connected to at least one output-side connection (21-24) of the sub-distribution unit (17).

13. Control system according to any one of Claims 8 to 12,
**characterized in that**
communication between the central command emitter (10) and the loads (11-16) takes place in accordance with the RDM protocol.

## Revendications

1. Procédé permettant de mettre en service un système de commande (1) destiné à plusieurs consommateurs répartis (11-16), par exemple des luminaires, des appareillages de lampes ou des capteurs, dans lequel les consommateurs (11-16) sont reliés par l'intermédiaire d'un système de bus (5) à un module central émetteur de commandes (10),
dans lequel le module central émetteur de commandes (10) demande aux consommateurs (11-16) de renvoyer un signal d'identification et contacte individuellement le consommateur (11-16) concerné si, suite à cette demande, un seul message de retour est reçu par le module émetteur de commandes (10),
**caractérisé en ce que**
le système de bus (5) comporte au moins une sous-unité de distribution (17), qui présente, sur son côté entrée, une connexion (20) tournée vers le module central émetteur de commandes (10) ainsi que, sur son côté sortie, au moins deux connexions (21-24) tournées vers les consommateurs (11-16),
dans lequel la sous-unité de distribution (17), lors de l'arrivée de messages de retour, ne transmet aux connexions (21-24) situées côté sortie, en réponse à la demande de renvoi d'un signal d'identification, qu'un seul des messages de retour par l'intermédiaire de la connexion (20) située côté entrée.

2. Procédé selon la revendication 1,
**caractérisé en ce que**
le module central émetteur de commandes (10) attribue, dans le cadre du contact individuel, une adresse de service au consommateur (11-16) et le cas échéant lui demande d'ignorer les demandes ultérieures en réponse à la demande d'un signal d'identification.

3. Procédé selon la revendication 1 ou 2,
**caractérisé en ce que**
la sous-unité de distribution (17) transmet le message de retour arrivé respectivement en premier.

4. Procédé selon la revendication 1 ou 2,
**caractérisé en ce que**
la sous-unité de distribution (17) attend, après l'arrivée d'un premier message de retour, pendant une première période prédéfinie et dans le cas où, pendant cette période,
• un message de retour arrive, qui satisfait un critère de sélection prédéfini, transmet ce message de retour ou
• aucun message de retour n'arrive, qui satisfait un critère de sélection prédéfini, transmet le message de retour arrivé en premier.

5. Procédé selon l'une quelconque des revendications précédentes,
**caractérisé en ce que**
une autre sous-unité de distribution (17) est raccordée au niveau d'au moins une connexion (21-24) située côté sortie de la sous-unité de distribution (17).

6. Procédé selon l'une quelconque des revendications précédentes,
**caractérisé en ce que**
la communication a lieu entre le module central émetteur de commandes (10) et les consommateurs (11-16) conformément au protocole RDM.

7. Sous-unité de distribution (17) conçue pour être utilisée dans un système de commande destiné à plusieurs consommateurs répartis (11-16), par exemple des luminaires, des appareillages de lampe ou des capteurs, dans laquelle le système de commande présente un module central émetteur de commandes (10), un système de bus (5) ainsi que plusieurs des consommateurs (11-16), dans laquelle les consommateurs (11-16) sont reliés par le biais du système de bus (5) au module central émetteur de commandes (10) et le module central émetteur de commandes (10) est conçu pour demander aux consommateurs (11-16) de renvoyer un signal d'identification et, dans le cas où, à la suite de cette demande, seul un message de retour unique est reçu par le module central émetteur de commandes (10), pour contacter individuellement le consommateur (11-16) concerné, dans laquelle la sous-unité de distribution (17) forme une partie du système de bus (5) ;
**caractérisée en ce que**
la sous-unité de distribution (17) comporte une connexion (20) située côté entrée tournée vers le module central émetteur de commandes (10), ainsi qu'au moins deux connexions (21-24) situées côté sortie tournées vers les consommateurs (11-16) et est conçue pour, lors de l'arrivée de messages de retour ne transmettre aux connexions (21-24) situées côté sortie, en réponse à la demande de renvoi d'un signal d'identification, qu'un seul des messages de retour par l'intermédiaire de la connexion (20) située côté entrée.

8. Système de commande destiné à plusieurs consommateurs répartis (11-16), par exemple des luminaires, des appareillages de lampe ou des capteurs,
présentant un module central émetteur de commandes (10), un système de bus (5), ainsi que plusieurs consommateurs (11-16),
dans lequel les consommateurs (11-16) sont reliés par l'intermédiaire du système de bus (5) au module central émetteur de commandes (10) et le module central émetteur de commandes (10) est conçu pour demander aux consommateurs (11-16) de renvoyer un signal d'identification et, dans le cas où, à la suite de cette demande, seul un message de retour unique est reçu par le module central émetteur de commandes (10), pour contacter individuellement le consommateur (11-16) concerné,
**caractérisé en ce que**
le système de bus (5) comporte au moins une sous-unité de distribution (17) selon la revendication 7.

9. Système de commande selon la revendication 8,
**caractérisé en ce que**
le module central émetteur de commandes (10) est conçu pour, dans le cadre du contact individuel, attribuer une adresse de service au consommateur (11-16) et, le cas échéant, lui demander d'ignorer les demandes ultérieures en réponse à la demande d'un signal d'identification.

10. Système de commande selon la revendication 8 ou 9,
**caractérisé en ce que**
la sous-unité de distribution (17) est conçue pour transmettre le message de retour respectivement arrivé en premier.

11. Système de commande selon la revendication 8 ou 9,
**caractérisé en ce que**
la sous-unité de distribution (17) est conçue, après l'arrivée d'un premier message de retour, pour attendre pendant une période prédéfinie et, dans le cas où, pendant cette période
• un message de retour arrive, qui satisfait un critère de sélection prédéfini, pour transmettre ce message de retour, ou
• aucun message de retour n'arrive, qui satisfait un critère de sélection prédéfini, pour transmettre le message de retour arrivé en premier.

12. Système de commande selon l'une quelconque des revendications 8 à 11,
**caractérisé en ce que**
une autre sous-unité de distribution (17) selon la revendication 7 est reliée au niveau d'au moins une connexion (21-24) située côté sortie de la sous-unité de distribution (17).

13. Système de commande selon l'une quelconque des revendications 8 à 12,
**caractérisé en ce que**
la communication a lieu entre le module central émetteur de commandes (10) et les consommateurs (11-16) conformément au protocole RDM.
